# DEMANDE DE BREVET EUROPEEN

(11) **EP 0 531 245 A1**
(43) Date de publication de la demande: **10.03.1993**
(21) Numéro de dépôt: 92500111.7
(22) Date de dépôt: 03.09.1992
(51) Int. Cl.: A23L 1/325

(54) **Une denrée alimentaire type hamburger**

(30) Priorité: 04.09.1991 ES 9101982
(71) Demandeur: LANCELOT TUNIDOS, S.L., E-33001 Oviedo (ES)
(72) Inventeur: Almendres Martinez, José Javier, W-33001 Oviedo (ES)
(74) Mandataire: Urizar Anasagasti, Jesus Maria

(57) **Abrégé**

Une denrée alimentaire, type hamburger, qui emploie comme produit de base pour son élaboration un mélange de poissons bleus en morceaux, sans arêtes et sans viscères ou nets de peau, sans tête et sans viscères, mêlés ou assaisonnés avec une série de composants d'arôme, goût et conservation naturels, le produit devant rester surgélé.

## Description

L'objet de la présente invention porte sur une denrée destinée à la nourrriture humaine et, plus concrètement, un produit préparé type hamburger, non seulement en ce qui concerne les composants faisant partie de celui-là, avec sa formule générale implicite, mais encore pour ce qui est du procédé suivi pour son élaboration.

La caractéristique la plus marquante de cette denrée alimentaire réside dans le fait que, pour son élaboration, les produits étant à la base de celle-là sont intégrés d'un mélange de poissons bleus, nets au préalable des arêtes, peaux et écailles, ainsi que de la tête et des viscères, lesquels sont assaisonnés et mêles avec une série de composants d'arôme, goût et conservation tout à fait naturels, le produit restant, jusqu'à sa commercialisation, surgélé.

Un hamburger avec ces particularités présente une série de caractéristiques le différenciant des autres hamburgers en viande, car il offre, entre autres, les suivants avantages:
- Il offre une excellente qualité diététique en apportant des graisses polysaturées propres aux poissons bleus (riches en HLD-Cholestérol). L'importance de cette qualité est si grande qu'elle nous a obligés à préserver à tout prix cette sorte de graisses au cours de tout le processus d'élaboration.
- La richesse alimentaire de ce poisson, non seulement par suite de sa teneur en protéines, mais encore du fait de ses divers groupes vitaminiques, nous a obligés aussi à préserver indemnes, dans leur totalité, ces groupes au cours de leur processus de fabrication, de sorte qu'ils soient présents dans le produit fini avant sa consommation.
- La richesse gastronomique de ce produit est aussi marquante, car il peut avoir un goût agréable et doux en même temps (quelque peu neutre), pouvant ainsi admettre toute sorte d'éventuelles variations et manipulations (grillé, enrobé, etc.) et les plus divers accompagnements (sauces des divers établisementd d'hambourgers, sauces spéciales de haute gastronomie tels que les "mojos" Canariens, etc. )

On a essayé aussi de parvenir à une texture le plus adéquate possible pour qu'ils posent être mangés aisément par tout le monde, depuis les enfants les plus petits jusqu'aux personnes les plus figées. Une texture avec une certaine consistance (qu'elle ne se brise pas facilement), qu'elle puisse être parfaitement "réduite en miettes" afin de pouvoir le donner à manger à un enfant et où l'on ne puisse pas trouver de morceaux d'épies pouvant troubler le goût, le cas échéant.

En parvenant à ces trois hypothèse, on obtient un produit fini avec un niveau de qualité excellent et tout à fait différent de ce qui existe actuellement dans cette sorte de produits de base.

En effet, il ne s'agit pas là de faire une conserve, car on n'y emploie nullement de conservant artificiel, car bien de ces produits conservants nuiraient directement au produit en question. Il n'est pas non plus mis en boîte déjà précuisiné.

Il ne s'agit pas non plus d'un précuisiné, ni d'un préparé industriel ayant à sa base des farines de Poisson, auquel on ajoute généralement des protéines et graisses animales ou végétales aux provenances les plus diverses, avec des produits conservants, colorants, aromatisants agrées et dont les effets sur la santé sont incertains.

Le produit que l'on y préconise est une denrée alimentaire bonne pour une diète de n'importe quelle personne, d'une bonne qualité en protéines et en vitamines, et avec d'excellentes qualités gastronomiques du fait de sa vaste variété de possibilités de combinaisons pour répondre aux différents goûts. C'est un produit qui une fois décongélé, doit être préparé grillé ou enrobé, tout comme un hamburger en viande.

Tel que nous l'avons indiqué, le produit de base pour la constitution de cet hamburger est formé des poissons bleus les plus fréquents, traitant par ordre d'importance les espèces suivantes: thonides, srdines, maquereau, saurel, chinchard, et aiguilles.

De tous ces poissons, on a analysé une série de paramètres nécessaires pour connaître, non seulement leur ordre d'importance, mais aussi la nature spécifique de leurs apports dans la formule finale, ainsi que le moment de manipulation et la forme de celle-ci, essayant d'obtenir un produit fini ayant les caractéristiques optimales précitées. Dans la formulation générale du produit, on peut diviser les poissons bleus en trois groupes:
- Thonides.
- Un deuxième groupe formé de chinchards, maquereaux, saurels et aiguilles.
- Sardines.

Chacun de ces groupes s'intègre dans la formule générale de cet hamburger en un pourcentage qui peut varier, cela dépendant du fait de vouloir renforcer ou diminuer certaines caractéristiques du produit fini, telles que sa teneur grasse, son goût, son arôme, sa couleur ou texture; néanmoins, ceux-là en font partie intégrante comme suit:
- Thonides, 30-50 %.
- Deuxième groupe de poissons bleus, 30-55%.
- Sardines, 15-25 %.

Quant aux composants nécessaires pour fournir de l'arôme, du goût et conserver le produit surgélé, eux tous naturels, tel que nous l'avons indiqué précédemment, on en emploie les suivants:
Poudre d'ail qui est un conservant qui fournit un goût spécial, tout en étant un aromatisant excellent, très important, d'd'ailleurs, pour d'autres raisons. Les qualités de conservation de l'acétate d'allyle et comme bactéricide sont excellentes, car, par exemple, il élimine et prévient chez les enfants les vers intestinaux, ce produit pouvant être avalé sans s'en apercevoir, car il n'y a ni de petits morceaux ni de restes du broyage.
- Poudre d'oignon, qui est aussi un conservant, aromatisant et un produit qui ajoute un goût caractéristique.
- Sel: conservant et aromatisant.
- Sucre: qui en renforce le goût.
- Poudre de persil: conservant tout en y apportant son goût.
- Sel de céleri: aromatisant et conservant qui en renforce le goût.

La formulation de ces composants est exprimée en grammes/Kilogrammes de poisson comme suit:

| | |
|---|---|
| Sel + sucre | 10-11 g/kg. |
| Poudre d'ail | 4-6 g/kg. |
| Oignon en poudre | 3-4 g/kg. |
| Persil en poudre | 2-3 g/kg. |
| Sel de céleri | 1-2 g/kg. |

Le processus de fabrication de ce produit alimentaire présente aussi des nouveautés techniques provenant notamment du fait de ne pas connaître un produit fini obtenu à partir de poissons bleus, ayant fallu élaborer, par conséquent, un procédé propre qui présente certaines carctéristiques nouvelles.

Dans une phase initiale, le poisson est soumis à un procédé de nettoyage et dépiècement différent pour chacune des espèces; ainsi:
Pour les thonides, il faut en extraire la totalité de la peau et les soumettre à un processus d'écaillement afin déviter que les couleurs bleues et argentées n'incident sur celles inévitables des sardines dans la couleur finale du produit. On peut les échauder à 120∥ environ en eau et les éplucher, étêter et dégager des viscères sans avoir besoin de leur ouvrir le ventre. Puis, on les ouvre, perpendiculairement, on leur extrait l'épine dorsale en écartant les échines du ventre.

Les sardines ont besoin d'une opération d'écaillement, d'extration de la tête et des viscères, tout en tirant l'épine dorsale, y compris la queue. Maintenant, les deux parties séparées sont broyées, prenant en considération s'il faut enlever ou non les arêtes latérales, cela ne dépendant que de la taille des exemplaires, et prenant en considération également si leur consistance est adéquate ou n'est pas adéquate pour passer inaperçues en broyage.

Les chinchards posent, en général, plus de problèmes pour leur nettoyage, car il faut leur enlever la peau à cause des écailles spéciales et cornées se trouvant de part et d'autre de leur corps; il faut donc les éplucher et les étêter ensuite en faisant une coupe dorsale et ventrale sur la peau, les étêtant plus tard, leur dégageant des viscères et les filetant conformément à la taille adéquate.

Les maquereaux, saurels et aiguilles subissent le même traitement de décapitation, leur enlevant les viscères et les filetant de la même façon.

Le procédé de nettoyage et dépiècement de toutes ces espèces doit être fait au plus vite possible et avec de l'eau superodorée pour avoir l'assurance d'une barrière suffisante pour éviter la prolifération bactérienne.

Les thonides et les espèces du deuxième groupe (chinchards, maquereaux, saurels et aiguilles) peuvent être hachés conjointement, à condition que l'on ait établi au préalable les proportions idoines en poids, données dans la formule générale, le diamètre le plus adéquat pour les morceaux de ces espèces étant légèrement supérieur à 5 millimètres, 6 ou 7 mms de préférence.

Le broyage des sardines doit être réalisé de sorte que les morceaux soient tout petits, même s'ils ont l'air de sortir plutôt du hachoir d'une pâte que d'éléments séparables, car il ne s'agit ni de faire de la farine de poisson ni du pâté de poisson. Il doit permette de remarquer les fibres que forment les paquets cellulaires, sans la moindre trace d'arêtes ou écailles.

Quant à la préparation des épices, il faut prendre en considération que l'ail en poudre doit être bien frais, déshydraté au plus possible et bien broyé pour qu'il possède toute la puissance de ses qualités et pour qu'il puisse couvrir la superficie la plus grande du produit. Le persil doit être traité de la même façcon, ainsi que l'oignon en poudre et le sel de céleri.

Quant au procédé définitif de formation du produit, il y a lieu de dire que les thonides plus le deuxième groupe doivent être bien hachés et mêlés, tout en faisant bien attention au fait qu'ils ne soient pas plus broyés si l'on se sert de moyens mécaniques pour le mélange. On y ajoute de l'ail en poudre, recherchant la plus grande homogénéité posible lors de l'addition du mélange, afin qu'il couvre la plus grande superficie du produit.

D'ailleurs, on ajoute à la sarine polybroyée le sel de céleri, recherchant aussi la plus grande homogénéité possible.

La pâte résultant de mêler le groupe des thonides avec le céleri en poudre, et celle des sardines plus le sel de céleri doivent faire l'objet d'une addition de sel plus du sucre entier suivant une proportion calculée au préalable, mélangeant le tout adéquatement en y ajoutant du poudre d'oignon suivant les proportions précédemment indiquées.

On lui donne une forme circulaire aplatie, le saupoudrant des deux côtés avec du poudre de persil auquel il faut ajouter une petite portion de sucre et d'idosel. Finalement, on recouvre le tout avec une gelée formée des restes du poisson à une température de 22∥ environ, laquelle, en se refroidissant, protègera le produit dans sa totalité, lui fournissant en même temps, au moment de sa préparation culinaire, un suc additionnel abondant.

Enfin, il est mis dans un récipient pour sa commercialisation avant ou après sa surgélation.

Après avoir décrit suffisamment la nature de la présente invention, ainsi qu'une façon de la mettre en application, il faut ajouter que l'on peut introduire des changement de forme, matières et disposition, dans l'ensemble et les parties la composant, pourvu que ces modifications ne s'écartent pas essentiellement des caractéristiques de l'invention que l'on revendique à la suite:

## Revendications

**1.-** Un produit alimentaire type hamburger, caractérisé en ce qu'il emploie comme produit de base pour son élaboration un mélange de poissons bleus en morceaux, sans arêtes et sans écailles ou dégagés de la peau, étêtés et sans viscères, mêlés ou assaisonnés avec une série de composants d'arôme, goût et conservation naturels, et qui est conservé par surgélation, dont la formule générale est la suivante: Thonides, 30-50%; un deuxième groupe formé d'un mélange de chinchards, maquereaux, saurels et aiguilles à 30-55% et de sardines à 15-25%; les composants d'arôme, goût et conservation en font partie dans les proportions suivantes: Sel + sucre: 10-11 g/Kg, poudre d'ail: 4-6 g/Kg, oignon 3-4 g/Kg, persil en poudre: 2-3 g/Kg et sel de céleri: 1-2 g/Kg.

**2.-** Un produit alimentaire type hamburger, caractérisé en ce que son procédé de fabrication, après le dégaement des arêtes, l'écaillement et l'extraction de la peau, viscères et têtes des poissons, consiste à hacher les thonides et le deuxième groupe de poissons et à les mêler de la façon voulue avec de la poudre d'ail; parallèlement, on ajoute aux sardines polybroyées du sel de céleri, faisant un mélange homogène; on ajoute aux deux pâtes en résultant du sel et du sucre dans les proportions indiquées, et ensuite de la poudre d'oignon, mêlant le tout à nouveau pour lui donner enfin une forme circulaire et saupoudrer avec de la poudre de persil, de la cassonade et de l'idosel, couvrant le tout d'une gelée faite avec les restes du poisson employé, procédant plus tard à le surgéler avant ou après sa mise en boîte.
